# EUROPEAN PATENT SPECIFICATION

(11) **EP 4 626 976 B1**
(45) Date of publication and mention of the grant of the patent: **18.11.2026**
(21) Application number: 23832923.9
(22) Date of filing: 29.11.2023
(51) Int. Cl.: C08L 83/04, C09J 183/04

(54) **SOFT SKIN ADHESIVE COMPOSITION**
WEICHHAUTKLEBSTOFFZUSAMMENSETZUNG
COMPOSITION ADHÉSIVE POUR LA PEAU MOLLE

(30) Priority: 02.12.2022 US 202263429630 P
(43) Date of publication of application: 08.10.2025
(73) Proprietor: Gelest, Inc., Morrisville, PA 19067 (US)
(72) Inventor: WATSON, Michael, John, Warrington, PA 18976 (US)
(74) Representative: Vossius & Partner Patentanwälte Rechtsanwälte mbB
(86) International application number: PCT/US2023/081491
(87) International publication number: WO 2024/118691

(56) References cited:
- WO-A1-2016/176109
- WO-A1-2017/117506
- WO-A1-2020/214720
- JP-A- 2005 336 327
- US-A1- 2011 028 635
- US-B2- 9 145 474

## Description

### CROSS-REFERENCE TO RELATED APPLICATIONS

This application claims priority to co-pending U.S. Provisional Application No. 63/429,630, filed December 2, 2022.

### BACKGROUND OF THE INVENTION

Silicone gels that adhere to the skin are well known. Such gels have many applications, such as for wearable sensors (glucose, heart rate, pulse, UV sun exposure patch, EKG, etc.), wound care, scar and skin therapy, and drug delivery. Conventional compositions typically contain combinations of vinyl functional MQ resins (generally copolymers of siloxanes formed from reactive or nonreactive trialkylsilyl ("M") and tetraalkylsilyl ("Q") structures), vinyl linear siloxanes, SiH chain extenders, and SiH crosslinkers. For example, WO 2005/102403; WO2008/057155; U.S. Patent No. 5,145,933; U.S. Patent No. 11,051,989; U.S. Patent No. 10,758,640; and U.S. Patent No. 10,662,330 describe a variety of silicone skin adhesive gel compositions. While there are variations among these formulations, these gels all contain alkenyl functional polysiloxanes and SiH functional siloxanes which vary in the number of SiH groups per any given molecule, the viscosity of SiH functional siloxanes, the SiH to alkenyl functional group molar ratio, the arrangement of the SiH groups on the siloxane molecules, the SiH overall content in the gel formulation, the SiH content in the chain extender relative to that in an SiH functional crosslinker or resin, and the SiH content in a crosslinker. JP2005336327A discloses an adhesive composition based on a monovinyl-, monhydrido-terminated polysiloxane, a divinyl-terminated polysiloxane, a dihydride-terminated polysiloxane and a Karstedt catalyst.

More specifically, conventional compositions contain dimethylvinyl α,ω-terminated siloxanes, an SiH siloxane crosslinker (with three or more SiH functional groups), and an α,ω-dimethylhydride terminated chain extender siloxane. Some known compositions also include vinyl functional silicone resins. However, while these formulations have good adhesion to the skin, there is room for improvement in the overall strength of these adhesives in order to handle larger or heavier objects to be adhered to the skin. The gel adhesives must also be removable from the skin without pain via a peel mechanism. Accordingly, soft skin adhesive compositions which have higher adhesion strength than known compositions and which can be removed/peeled from the skin with no pain would be desirable.

### SUMMARY OF THE INVENTION

In one embodiment, aspects of the disclosure relate to a silicone gel forming composition comprising:
(a) an α-dimethylvinylsiloxy-ω-dimethylhydride terminal polydimethylsiloxane;
(b) a chain stopper comprising a component having formula (I) and/or formula (II): 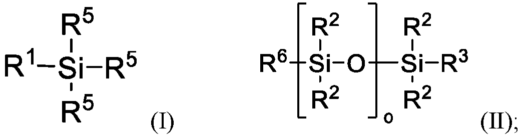 and
(c) a hydrosilylation catalyst;
wherein R¹ is a terminal alkenyl group having 2 to about 22 carbon atoms, R⁵ is a linear or branched alkyl group having 1 to about 8 carbon atoms, R⁶ is hydrogen or a terminal alkene having 2 to about 22 carbon atoms, each R² and R³ is independently a linear or branched alkyl group having 1 to about 8 carbon atoms, and o is an integer such that the viscosity of the component having formula (II) is about 2 to about 20,000 mPa-s.

**In** a second embodiment, aspects of the disclosure relate to a silicone gel forming composition comprising:
(a) an α-dimethylvinylsiloxy-ω-dimethylhydride terminal polydimethylsiloxane;
(b) a chain stopper comprising an alpha olefin or a siloxane comprising one vinyl group or one terminal hydride group; and
(c) a hydrosilylation catalyst.

Advantageous refinements of the invention, which can be implemented alone or in combination, are specified in the dependent claims.

**In** summary, the following embodiments are proposed as particularly preferred in the scope of the present invention:
Embodiment 1: A silicone gel forming composition comprising:
   (a) an α-dimethylvinylsiloxy-ω-dimethylhydride terminal polydimethylsiloxane;
   (b) a chain stopper comprising a component having formula (I) and/or formula (II): 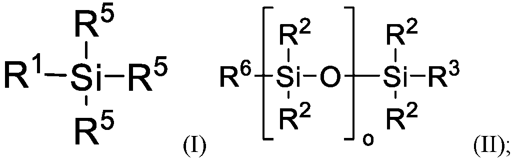 and
   (c) a hydrosilylation catalyst;
   wherein R¹ is a terminal alkenyl group having 2 to about 22 carbon atoms, R⁵ is a linear or branched alkyl group having 1 to about 8 carbon atoms, R⁶ is hydrogen or a terminal alkene having 2 to about 22 carbon atoms, each R² and R³ is independently a linear or branched alkyl group having 1 to about 8 carbon atoms, and o is an integer such that the viscosity of the component having formula (II) is about 2 to about 20,000 mPa-s.
Embodiment 2: The composition according to Embodiment 1, wherein component (a) has formula (III) and a viscosity of about 50 to about 1000 mPa-s: 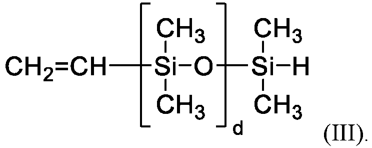
Embodiment 3: The composition according to Embodiment 1 or 2, wherein component (b) is an α-dimethylvinylsiloxy-ω-n-butyl terminal polydimethylsiloxane.
Embodiment 4: The composition according to any of Embodiments 1 to 3, wherein the composition comprises about 350 parts of component (a), about 0.5 to about 10 parts of component (b), and about 0.01 to about 1 part of component (c).
Embodiment 5: The composition according to any of Embodiments 1 to 4, further comprising component (d) an α,ω-dimethylhydridesiloxy terminal polydimethylsiloxane chain extender.
Embodiment 6: The composition according to any of Embodiments 1 to 5, wherein component (d) comprises a polymer having formula (IV) and has a viscosity of about 2 to about 10,000 mPa-s: 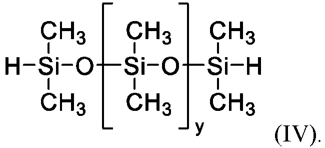
Embodiment 7: The composition according to any of Embodiments 1 to 6, further comprising component (e) an α,ω-dimethylvinylsiloxy terminal polydimethylsiloxane.
Embodiment 8: The composition according to any of Embodiments 1 to 7, wherein component (e) comprises a polymer having formula (V) and has a viscosity of about 2 to about 10,000 mPa-s: 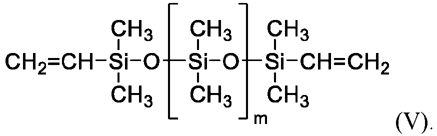
Embodiment 9: The composition according to any of Embodiments 1 to 8, further comprising component (f) linear vinyl siloxane.
Embodiment 10: The composition according to any of Embodiments 1 to 9, wherein component (f) comprises a polymer having formula (VI), and has a viscosity of about 10 to about 10,000 Pa-s, wherein a is about 45 to 97 mole percent relative to b, and wherein the polymer having formula (VI) has at least three silicon bonded hydride atoms: 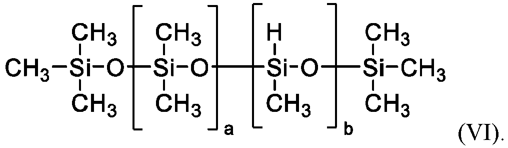
Embodiment 11: The composition according to any of Embodiments 1 to 10, further comprising component (g) at least one rate controller or rate inhibitor.
Embodiment 12: The composition according to any of Embodiments 1 to 11, wherein component (g) is selected from the group consisting of 2-methyl-3-butyn-2-ol, 1-ethynyl-cyclohexanol, diallylmaleate, triallylisocyanurate, 1,3,5,7-tetravinyl-1,3,5,7-tetramethylcyclotetrasiloxane, and triphenylphosphite.
Embodiment 13: A silicone gel obtained by heating and curing the composition according to any of Embodiments 1 to 12.
Embodiment 14: A silicone gel forming composition comprising:
   (a) an α-dimethylvinylsiloxy-ω-dimethylhydride terminal polydimethylsiloxane;
   (b) a chain stopper comprising an alpha olefin or a siloxane comprising one vinyl group or one terminal hydride group; and
   (c) a hydrosilylation catalyst.
Embodiment 15: The composition according to Embodiment 14, wherein component (b) is a siloxane having formula (VII): 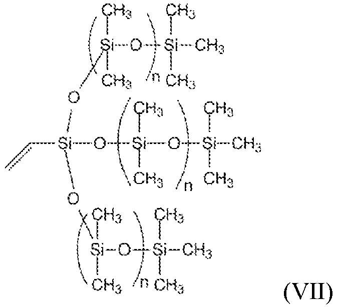 wherein n is an integer such that the viscosity of the compound having formula (VII) is about 2 to about 20,000 mPa-s.
Embodiment 16: A silicone gel obtained by heating and curing the composition according to Embodiments 14 or 15.

### BRIEF DESCRIPTION OF THE DRAWINGS

The foregoing summary, as well as the following detailed description of the invention, will be better understood when read in conjunction with the appended drawing. For the purpose of illustrating the invention, there are shown in the drawings embodiments which are presently preferred. It should be understood, however, that the invention is not limited to the precise arrangements and instrumentalities shown. In the drawing:
Fig. 1 is a side elevational view of a testing apparatus for testing the compositions in accordance with embodiments of the disclosure.

### DETAILED DESCRIPTION OF THE INVENTION

According to one aspect of the disclosure, provided is a silicone gel forming composition comprising:
(a) an α-dimethylvinylsiloxy-ω-dimethylhydride terminal polydimethylsiloxane;
(b) a chain stopper comprising a component having formula (I) and/or formula (II): 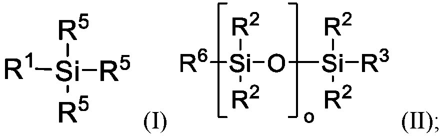 and
(c) a hydrosilylation catalyst;
wherein R¹ is a terminal alkenyl group having 2 to about 22 carbon atoms, R⁵ is a linear or branched alkyl group having 1 to about 8 carbon atoms, R⁶ is hydrogen or a terminal alkene having 2 to about 22 carbon atoms, each R² and R³ is independently a linear or branched alkyl group having 1 to about 8 carbon atoms, and o is an integer such that the viscosity of the component having formula (II) is about 2 to about 20,000 mPa-s.

Component (a) is a mono-hydride/mono-vinyl siloxane (α-dimethylvinylsiloxy-ω-dimethylhydride terminal polydimethylsiloxane) such as one having formula (III). 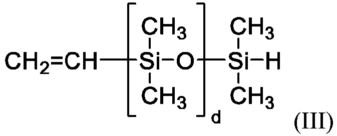 Variable d, representing the number of repeat units, is an integer selected so that the viscosity of component (a) is about 50 to about 1000 mPa-s.

Component (b) is a chain stopper or end-capper which functions to end the polymer chain and make such an end unreactive, and contains a component having Formula (I) and/or a component having Formula (II). In Formula (I), preferred R¹ groups include -CH=CH₂, - CH₂CH=CH₂, -CH₂CH₂CH=CH₂, -CH₂CH₂CH₂CH₂CH=CH₂, etc.; most preferably R¹ is vinyl. More generally, R¹ in Formula (I) is -(CH₂)ₓCH=CH₂ where x is an integer of 0 to about 20. Preferred R⁵ groups are small linear alkyl groups, such as methyl, ethyl, and propyl, most preferably methyl.

In Formula (II), R² and R³ may be the same or different and are both preferably small alkyl groups, such as methyl, ethyl, propyl, or butyl groups. R⁶ may be hydrogen or a terminal alkene, such as -CH=CH₂, -CH₂CH=CH₂, -CH₂CH₂CH=CH₂, -CH₂CH₂CH₂CH₂CH=CH₂, etc. More generally, R⁶ in Formula (II) is -(CH₂)ₓCH=CH₂ where x is an integer of 0 to about 20. Preferably, R⁶ is hydrogen or a vinyl group.

A preferred component (b) is an α-dimethylvinylsiloxy-ω-n-butyl terminal polydimethylsiloxane such as one having this formula:

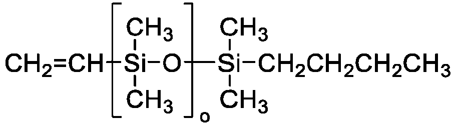

Other preferred end-blocker components include those having the following structures:

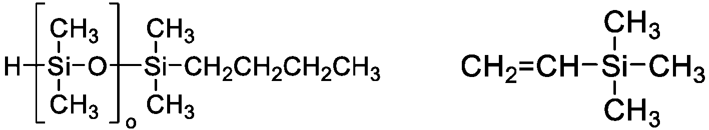

Component (c) is, for example, Karstedt's catalyst (commonly known in the art and as described in U.S. Patent No. 3,775,452), such as diluted in α, ω-dimethylvinylsiloxy terminal PDMS to contain 3.0 to 3.5% Pt content by weight. Other platinum hydrosilylation catalysts which are known in the art or to developed, such as Spier's catalyst, may also be employed to catalyze the SiH to vinyl hydrosilylation.

Exemplary compositions contain about 350 parts of component (a), about 0.5 to about 10 parts of component (b), preferably about 1 to about 5 parts of component (b), and most preferably about 1.5 to about 3 parts of component (b), and a catalytic amount of component (c), such as about 0.01 to about 1 parts, preferably about 0.1 to about 0.5 parts.

Additional optional components may also be present in the composition. For example, optional component (d), which functions as an SiH siloxane chain extender, may be an α,ω-dimethylhydridesiloxy terminal polydimethylsiloxane, such as one having formula (IV). Variable y, representing the number of repeat units, is an integer selected so that the viscosity of component (d) is about 2 to about 10,000 mPa-s, preferably about 20 to about 80 mPa-s.

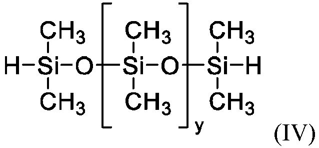

Optional component (e) is an α,ω-dimethylvinylsiloxy terminal polydimethylsiloxane, such as one having formula (V): 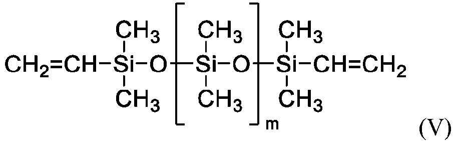 Variable m, representing the number of repeat units, is an integer selected so that the viscosity of component (e) is about 2 to about 10,000 mPa-s, preferably about 100 to about 3,000 mPa-s, more preferably about 500 to about 2,000 mPa-s.

According to one embodiment of the disclosure, if both (d) and (e) are contained in the composition, the ratio of the silicon bonded hydride in (d) to the vinyl in (e) is preferably about 1.5 to about 0.7 on a molar basis, more preferably about 1.1 to about 1.

Optional component (f) is a standard linear vinyl siloxane, such as α,ω-dimethylhydridesiloxy terminal polydimethylsiloxane having formula (VI). 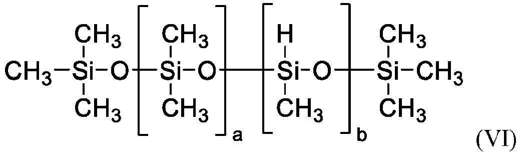 In formula (VI), "a" is preferably about 45 to about 97 mole percent relative to "b," (f) has at least three silicon bonded hydride atoms in the molecule, and "a" and "b" are integers selected such that the viscosity of (f) is about 10 to about 10,000 mPa-s, preferably about 10 to about 1000 mPa-s, and more preferably about 10 to about 50 mPa-s.

Optional component (g) is a rate controller/inhibitor, such as, for example, 2-methyl-3-butyn-2-ol, 1-ethynyl-cyclohexanol, diallylmaleate, triallylisocyanurate, 1,3,5,7-tetravinyl-1,3,5,7-tetramethylcyclotetrasiloxane, or triphenylphosphite. However, other rate controllers and inhibitors which are commonly known in the art or to be developed for such applications are also within the scope of the disclosure. It is within the scope of the disclosure to include one or more of these compounds as component (g).

An exemplary composition according to aspects of the disclosure contains 350 parts of component (a), 0 to about 50 parts of (d), 0 to about 50 parts of (e), 0 to about 2 parts of (f), and 0 to about 1.4 parts of (g), with the understanding that the molar ratios of silicon bonded hydride to vinyl in (d) and (e) described previously are employed. A preferred composition contains 0 to about 20 parts (d), more preferably 0 to about 5 parts (d), 0 to about 20 parts (e), more preferably 0 to about 5 parts (e), 0 to about 1.8 parts (f), more preferably 0 to about 1.4 parts (f), and 0 to about 1 parts (g), more preferably 0 to about 0.5 parts (g).

Component (a) is included in the formulation to react with itself in the presence of component (c) to provide a low durometer soft silicone when cured that has a high tensile strength and high percent elongation in tension. The compositions described herein have very low viscosity but provide cured properties typically observed with high viscosity formulations due to the high degree of chain length. The addition of a small amount of component (b) allows for great extension and high strength for the cured silicone, and also results in some long nonreactive polymer chains that add tack and adhesion when (a), (c), and (b) are heated and cured.

It has been found that the use of mono-hydride/mono-vinyl siloxanes (a) in conjunction with siloxane chain stoppers (b) results in the formation of cured gels which exhibit improved adhesive strength relative to prior art adhesives, yet allow for no pain when the adhesive is peeled off of the skin. The use of the mono-hydride/mono-vinyl siloxane with an SiH siloxane chain extender (d) and a standard linear vinyl siloxane (f) containing essentially equal molar amounts of SiH and vinyl species also produces formulations with improved adhesion strength.

It is also within the scope of the disclosure to include various alternative chain stoppers, including, for example, alpha olefins, a version of component (b) utilizing SiH instead of Si-vinyl, and a siloxane with only one vinyl or SiH group such as the compound having formula (VII): 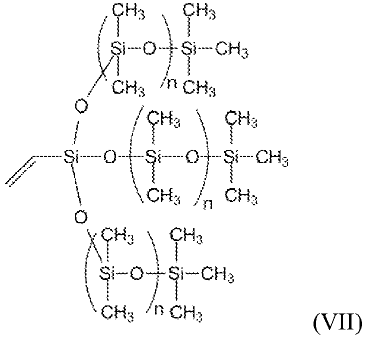 In formula (VII), n is an integer such that the viscosity is about 2 to 20,000 mPa-s.

The soft skin adhesive compositions according to the disclosure may be formed (cured) into gels by heating and curing at elevated temperatures. Appropriate heating times and durations may be determined by routine experimentation depending on the specific components, but may involve heating at about 90°C to 150°C, preferably at about 100°C, for about one hour to about 16 hours.

Due to their high adhesion strength and absence of pain upon application and removal from the skin, the gels as described herein have many applications, such as for applying wearable sensors (glucose, heart rate, pulse, UV sun exposure patch, EKG, etc. of varying materials), wound care, scar and skin therapy, and drug delivery.

Unless otherwise stated, any numerical value set forth herein is to be understood as being modified in all instances by the term "about." Thus, a numerical value typically includes ± 10% of the recited value. For example, the recitation of a temperature such as "10°C" or "about 10°C" includes 9°C and 11°C and all temperatures therebetween. Further, all numerical ranges expressed in this disclosure expressly encompass all possible subranges, all individual numerical values within that range, including integers within such ranges and fractions and decimal amounts of the values unless the context clearly indicates otherwise.

The invention will now be described in connection with the following, non-limiting examples.

Four cured gels (two inventive and one comparative) were each obtained by preparing a gel-forming composition containing the components described below and curing a 12 mm thick sample for 1 hour at 100°C in an aluminum dish, then cooled to room temperature. It has been found that testing adhesives on skin is difficult because skin surfaces change and vary based on ethnicity, age, gender, and natural genetic variations. However, testing on PET provides a surface energy similar to skin.

The cured gels were analyzed by loop adhesion testing using a 203.2 mm long, 80.645 mm wide, and 0.0045 inch thick PET film with a pull rate of 508 mm/min on the cured gel as follows, as shown in Fig. 1. The PET was formed into a loop with 152.4 mm length clamped from end to end on a Stable Micro Systems TA-XT plus Texture Analyzer. The clamps on the texture analyzer were lowered until the PET film would conform to a 161.3 mm diameter x 16.5 mm thickness cured silicone gel adhesive sample. The middle portion of the PET loop was pressed onto the cured silicone gel adhesive at a 12.7 mm x 12.7 mm cross-section of the cured adhesive. A small amount of force with one finger was applied to make sure the adhesive fully wet the entire 12.7 x mm x 12.7 mm area (as if applying an adhesive bandage). The clamps were then pulled upward at 508 mm/min and the maximum force was measured.

### Example 1: Inventive Gel 1

350 g (A) α-dimethylvinylsiloxy-ω-dimethylhydride terminal polydimethylsiloxane having a viscosity of 150 to 350 cP were combined with 2.92 g (B) α-dimethylvinylsiloxy-ω-n-butyl terminal polydimethylsiloxane having a viscosity of 80 to 120 cP in a 300 GRAM MAX TALL Flacktek SpeedMixer cup and mixed by hand with a spatula. Next, 0.035 g of Karstedt's hydrosilylation catalyst (C), 3.0 to 3.5% Pt content in α, ω-dimethylvinylsiloxy terminal PDMS, was combined with (A) and (B) in the cup and mixed by hand with a spatula. This mixture was then mixed on a Flacktek SpeedMixer model DAC 600.2 VAC-p centrifugal mixer at 800 rpm for 1 minute, 45 seconds at a 35 rpm vacuum setting, immediately followed by mixing at 2350 rpm for 15 seconds at the same vacuum level.

The order of addition of the components is important. For example, component (A) can be combined with (C) and blended by hand, followed by adding (B) and mixing by hand and then on the mixer. However, (C) should not be combined with (B), followed by (A). Any mixer capable of fully mixing the raw material can be used. Typically, the mixture is put under vacuum within the mixer to remove air, but this can be done after mixing as well. All of the mixing is performed at room temperature and heat is not recommended during the mixing process. In fact, if large quantities are to be made, the temperature of mixing should preferably be kept below 40°C. After curing for 1 hour at 100°C, the cured gel was analyzed by loop adhesion testing as described above. The loop adhesion strength was found to be 8.5 kPa with good adhesion to skin and no pain or residue on application and removal from the skin. Specifically, when applying the adhesive to skin with hair, no hair was pulled off and removal from hairy skin or hairless skin was painless.

### Example 2: Inventive Gel 2

350 g (A) α-dimethylvinylsiloxy-ω-dimethylhydride terminal polydimethylsiloxane having a viscosity of 150 to 350 cP were combined with 2.92 g (B) α-dimethylvinylsiloxy-ω-n-butyl terminal polydimethylsiloxane having a viscosity of 80 to 120 cP in a 300 GRAM MAX TALL Flacktek SpeedMixer cup and mixed by hand with a spatula. Next, 0.035 g of Karstedt's hydrosilylation catalyst (C), 3.0 to 3.5% Pt content in α, ω-dimethylvinylsiloxy terminal PDMS, was combined with (A) and (B) in the cup and mixed by hand with a spatula. 0.57 g of Component (E), α,ω-dimethylvinylsiloxy terminal polydimethylsiloxane having a viscosity of 1000 cP, and 0.66 g of Component (D), α,ω-dimethylhydridesiloxy terminal polydimethylsiloxane having a viscosity of 50 cP, were then combined in the cup with the other components and all were mixed by hand with a spatula. This mixture was then mixed on a Flacktek SpeedMixer model DAC 600.2 VAC-p centrifugal mixer at 800 rpm for 1 minute, 45 seconds at a 35 rpm vacuum setting, immediately followed by mixing at 2350 rpm for 15 seconds at the same vacuum level. The order listed above is preferred, also components (D) and (E) may be added in either order relative to each other.

After curing for 1 hour at 100°C, the cured gel was analyzed by loop adhesion testing as described above. The loop adhesion strength was found to be 8.3 kPa with good adhesion to skin and no pain or residue on application and removal from the skin. Specifically, when applying the adhesive to skin with hair, no hair was pulled off and removal from hairy skin or hairless skin was painless.

### Example 3: Inventive Gel 3

90.13 g (A) α-dimethylvinylsiloxy-ω-dimethylhydride terminal polydimethylsiloxane having a viscosity of 150 to 350 cP were combined with 9.57 g (B) α-dimethylvinylsiloxy-ω-n-butyl terminal polydimethylsiloxane having a viscosity of 80 to 120 cP in a 300 GRAM MAX TALL Flacktek SpeedMixer cup and mixed by hand with a spatula. Next, 0.06 g of Karstedt's hydrosilylation catalyst (C), 3.0 to 3.5% Pt content in α, ω-dimethylvinylsiloxy terminal PDMS, was combined with (A) and (B) in the cup and mixed by hand with a spatula. 6.43 g of Component (E), α,ω-dimethylvinylsiloxy terminal polydimethylsiloxane having a viscosity of 1000 cP, and 3.44 g of Component (D), α,ω-dimethylhydridesiloxy terminal polydimethylsiloxane having a viscosity of 50 cP, were then combined in the cup with the other components and all were mixed by hand with a spatula. This mixture was then mixed on a Flacktek SpeedMixer model DAC 600.2 VAC-p centrifugal mixer at 800 rpm for 1 minute, 45 seconds at a 35 rpm vacuum setting, immediately followed by mixing at 2350 rpm for 15 seconds at the same vacuum level. The order listed above is preferred, but components (D) and (E) may be added in either order relative to each other.

After curing for 1 hour at 100°C, the cured gel was analyzed by loop adhesion testing as described above. The loop adhesion strength was found to be 12.21 kPa with good adhesion to skin and no pain or residue on application and removal from the skin. Specifically, when applying the adhesive to skin with hair, no hair was pulled off and removal from hairy skin or hairless skin was painless.

### Example 4: Comparative Gel 1

366 g of Component (E), α,ω-dimethylvinylsiloxy terminal polydimethylsiloxane having a viscosity of about 1000 cP, were combined with 0.27 g of Component (G), 2-methyl-3-butyn-2-ol, and 0.035 g of Component (C), Karstedt's hydrosilylation catalyst in a 300 GRAM MAX TALL Flacktek SpeedMixer Cup. The raw materials were then mixed by hand with a spatula. 31.63 g of Component (D), α,ω-dimethylhydridesiloxy terminal polydimethylsiloxane having a viscosity of 50 cP, and 2.65 g of Component (F), α,ω-trimethyl terminated hydridemethyl/dimethyl polysiloxane copolymer having a viscosity of 25 to 35 cP, were combined with the previous raw materials in the SpeedMixer cup and mixed by hand with a spatula. This mixture was then mixed on a Flacktek SpeedMixer model DAC 600.2 VAC-p centrifugal mixer at 800 rpm for 1 minute, 45 seconds at a 35 rpm vacuum setting, immediately followed by mixing at 2350 rpm for 15 seconds at the same vacuum level. The order listed above is preferred, also components (D) and (E) may be added in either order relative to each other.

After curing for 1 hour at 100°C, the cured gel was analyzed by loop adhesion testing as described above. The loop adhesion strength was found to be 6.2 kPa with good adhesion to skin and no pain or residue on application and removal from the skin.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. A silicone gel forming composition comprising:
(a) an α-dimethylvinylsiloxy-ω-dimethylhydride terminal polydimethylsiloxane;
(b) a chain stopper comprising a component having formula (I) and/or formula (II): 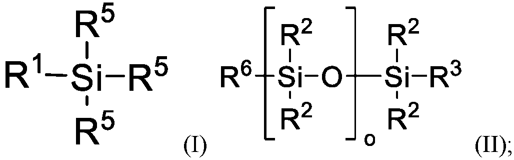 and
(c) a hydrosilylation catalyst;
wherein R¹ is a terminal alkenyl group having 2 to about 22 carbon atoms, R⁵ is a linear or branched alkyl group having 1 to about 8 carbon atoms, R⁶ is hydrogen or a terminal alkene having 2 to about 22 carbon atoms, each R² and R³ is independently a linear or branched alkyl group having 1 to about 8 carbon atoms, and o is an integer such that the viscosity of the component having formula (II) is about 2 to about 20,000 mPa-s.

2. The composition according to claim 1, wherein component (a) has formula (III) and a viscosity of about 50 to about 1000 mPa-s:

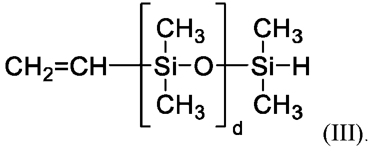

3. The composition according to claim 1 or 2, wherein component (b) is an α-dimethylvinylsiloxy-ω-n-butyl terminal polydimethylsiloxane.

4. The composition according to any of claims 1 to 3, wherein the composition comprises about 350 parts of component (a), about 0.5 to about 10 parts of component (b), and about 0.01 to about 1 part of component (c).

5. The composition according to any of claims 1 to 4, further comprising component (d) an α,ω-dimethylhydridesiloxy terminal polydimethylsiloxane chain extender.

6. The composition according to any of claims 1 to 5, wherein component (d) comprises a polymer having formula (IV) and has a viscosity of about 2 to about 10,000 mPa-s:

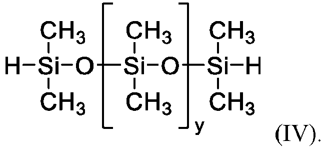

7. The composition according to any of claims 1 to 6, further comprising component (e) an α,ω-dimethylvinylsiloxy terminal polydimethylsiloxane.

8. The composition according to any of claims 1 to 7, wherein component (e) comprises a polymer having formula (V) and has a viscosity of about 2 to about 10,000 mPa-s:

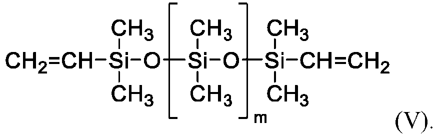

9. The composition according to any of claims 1 to 8, further comprising component (f) linear vinyl siloxane.

10. The composition according to any of claims 1 to 9, wherein component (f) comprises a polymer having formula (VI), and has a viscosity of about 10 to about 10,000 Pa-s, wherein a is about 45 to 97 mole percent relative to b, and wherein the polymer having formula (VI) has at least three silicon bonded hydride atoms:

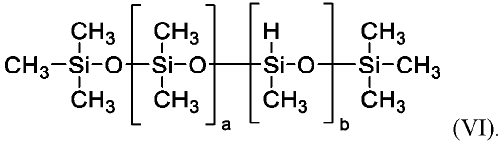

11. The composition according to any of claims 1 to 10, further comprising component (g) at least one rate controller or rate inhibitor.

12. The composition according to any of claims 1 to 11, wherein component (g) is selected from the group consisting of 2-methyl-3-butyn-2-ol, 1-ethynyl-cyclohexanol, diallylmaleate, triallylisocyanurate, 1,3,5,7-tetravinyl-1,3,5,7-tetramethylcyclotetrasiloxane, and triphenylphosphite.

13. A silicone gel obtained by heating and curing the composition according to any of claims 1 to 12.

14. A silicone gel forming composition comprising:
(a) an α-dimethylvinylsiloxy-ω-dimethylhydride terminal polydimethylsiloxane;
(b) a chain stopper comprising an alpha olefin or a siloxane comprising one vinyl group or one terminal hydride group; and
(c) a hydrosilylation catalyst.

15. The composition according to claim 14, wherein component (b) is a siloxane having formula (VII): 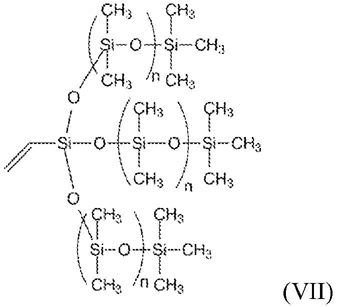 wherein n is an integer such that the viscosity of the compound having formula (VII) is about 2 to about 20,000 mPa-s.

16. A silicone gel obtained by heating and curing the composition according to claim 14 or 15.

## Patentansprüche

1. Eine silikongelbildende Zusammensetzung, umfassend:
(a) ein Polydimethylsiloxan mit α-Dimethylvinylsiloxy-ω-dimethylhydrid-Endgruppen;
(b) einen Kettenstopper, der eine Komponente mit der Formel (I) und/oder Formel (II) umfasst: 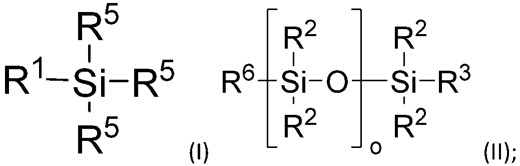 und
(c) einen Hydrosilylierungskatalysator;
wobei R¹ eine endständige Alkenylgruppe mit 2 bis etwa 22 Kohlenstoffatomen ist, R⁵ eine lineare oder verzweigte Alkylgruppe mit 1 bis etwa 8 Kohlenstoffatomen ist, R⁶ Wasserstoff oder ein endständiges Alken mit 2 bis etwa 22 Kohlenstoffatomen ist, jedes R² und R³ unabhängig eine lineare oder verzweigte Alkylgruppe mit 1 bis etwa 8 Kohlenstoffatomen ist und o eine ganze Zahl ist, so dass die Viskosität der Komponente mit der Formel (II) etwa 2 bis etwa 20.000 mPa·s beträgt.

2. Die Zusammensetzung gemäß Anspruch 1, wobei Komponente (a) die Formel (III) und eine Viskosität von etwa 50 bis etwa 1.000 mPa·s aufweist:

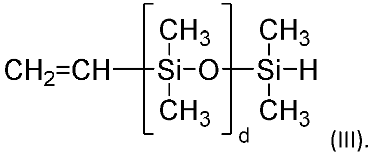

3. Die Zusammensetzung gemäß Anspruch 1 oder 2, wobei Komponente (b) ein Polydimethylsiloxan mit α-Dimethylvinylsiloxy-ω-n-butyl-Endgruppen ist.

4. Die Zusammensetzung gemäß einem der Ansprüche 1 bis 3, wobei die Zusammensetzung etwa 350 Teile Komponente (a), etwa 0,5 bis etwa 10 Teile Komponente (b) und etwa 0,01 bis etwa 1 Teil Komponente (c) umfasst.

5. Die Zusammensetzung gemäß einem der Ansprüche 1 bis 4, ferner umfassend Komponente (d), einen Polydimethylsiloxan-Kettenverlängerer mit α,ω-Dimethylhydridsiloxy-Endgruppen.

6. Die Zusammensetzung gemäß einem der Ansprüche 1 bis 5, wobei Komponente (d) ein Polymer mit der Formel (IV) umfasst und eine Viskosität von etwa 2 bis etwa 10.000 mPa·s aufweist:

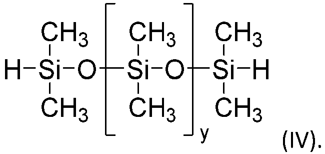

7. Die Zusammensetzung gemäß einem der Ansprüche 1 bis 6, ferner umfassend Komponente (e), ein Polydimethylsiloxan mit α,ω-Dimethylvinylsiloxy-Endgruppen.

8. Die Zusammensetzung gemäß einem der Ansprüche 1 bis 7, wobei Komponente (e) ein Polymer mit der Formel (V) umfasst und eine Viskosität von etwa 2 bis etwa 10.000 mPa·s aufweist:

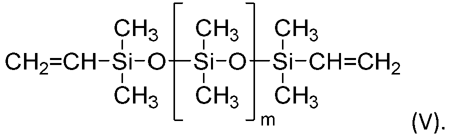

9. Die Zusammensetzung gemäß einem der Ansprüche 1 bis 8, ferner umfassend Komponente (f), ein lineares Vinylsiloxan.

10. Die Zusammensetzung gemäß einem der Ansprüche 1 bis 9, wobei Komponente (f) ein Polymer mit der Formel (VI) umfasst und eine Viskosität von etwa 10 bis etwa 10.000 Pa·s aufweist, wobei a etwa 45 bis 97 Molprozent bezogen auf b beträgt und wobei das Polymer mit der Formel (VI) mindestens drei an Silicium gebundene Hydridatome aufweist:

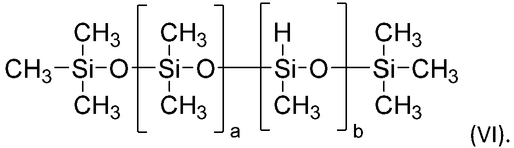

11. Die Zusammensetzung gemäß einem der Ansprüche 1 bis 10, ferner umfassend Komponente (g), mindestens einen Geschwindigkeitsregler oder Geschwindigkeitshemmer.

12. Die Zusammensetzung gemäß einem der Ansprüche 1 bis 11, wobei Komponente (g) ausgewählt ist aus der Gruppe bestehend aus 2-Methyl-3-butin-2-ol, 1-Ethinylcyclohexanol, Diallylmaleat, Triallylisocyanurat, 1,3,5,7-Tetravinyl-1,3,5,7-tetramethylcyclotetrasiloxan und Triphenylphosphit.

13. Ein Silikongel, erhalten durch Erwärmen und Härten der Zusammensetzung gemäß einem der Ansprüche 1 bis 12.

14. Eine silikongelbildende Zusammensetzung, umfassend:
(a) ein Polydimethylsiloxan mit α-Dimethylvinylsiloxy-ω-dimethylhydrid-Endgruppen;
(b) einen Kettenstopper, umfassend ein alpha-Olefin oder ein Siloxan, das eine Vinylgruppe oder eine endständige Hydridgruppe umfasst; und
(c) einen Hydrosilylierungskatalysator.

15. Die Zusammensetzung gemäß Anspruch 14, wobei Komponente (b) ein Siloxan mit der Formel (VII) ist: 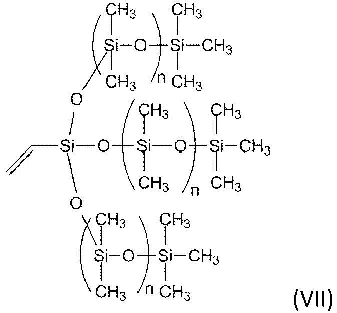 wobei n eine ganze Zahl ist, so dass die Viskosität der Verbindung mit der Formel (VII) etwa 2 bis etwa 20.000 mPa·s beträgt.

16. Ein Silikongel, erhalten durch Erwärmen und Härten der Zusammensetzung gemäß Anspruch 14 oder 15.

## Revendications

1. Composition formant un gel de silicone comprenant :
(a) un polydiméthylsiloxane à terminaison α-diméthylvinylsiloxy-ω-diméthylhydrure ;
(b) un limiteur de chaîne comprenant un composant ayant la formule (I) et/ou la formule (II) : 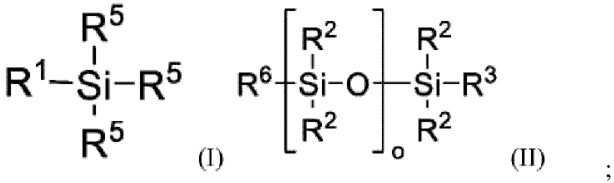 et
(c) un catalyseur d'hydrosilylation ;
dans lesquelles R¹ est un groupe terminal alcényle ayant 2 à environ 22 atomes de carbone, R⁵est un groupe alkyle linéaire ou ramifié ayant 1 à environ 8 atomes de carbone, R⁶ est un hydrogène ou un alcène terminal ayant 2 à environ 22 atomes de carbone, chaque R² et R³ est indépendamment un groupe alkyle linéaire ou ramifié ayant 1 à environ 8 atomes de carbone, et o est un entier de telle sorte que la viscosité du composant ayant la formule (II) est d'environ 2 à environ 20 000 mPa·s.

2. Composition selon la revendication 1, dans laquelle le composant (a) a la formule (III) et une viscosité d'environ 50 à environ 1000 mPa·s.

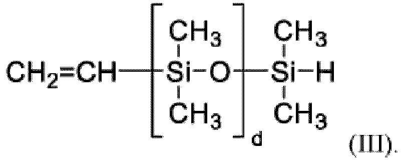

3. Composition selon la revendication 1 ou 2, dans laquelle le composant (b) est un polydiméthylsiloxane à terminaison α-diméthylvinylsiloxy-ω-n-butyle.

4. Composition selon l'une quelconque des revendications 1 à 3, dans laquelle la composition comprend environ 350 parties du composant (a), environ 0,5 à environ 10 parties du composant (b), et environ 0,01 à environ 1 partie du composant (c).

5. Composition selon l'une quelconque des revendications 1 à 4, comprenant en outre le composant (d) un allongeur de chaîne de polydiméthylsiloxane à terminaison α,ω-diméthylhydrure-siloxy.

6. Composition selon l'une quelconque des revendications 1 à 5, dans laquelle le composant (d) comprend un polymère ayant la formule (IV) et a une viscosité d'environ 2 à environ 10 000 mPa·s :

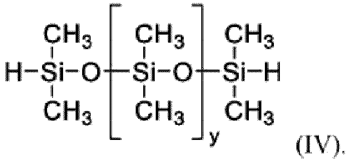

7. Composition selon l'une quelconque des revendications 1 à 6, comprenant en outre le composant (e) un polydiméthylsiloxane à terminaison α,ω-diméthylvinylsiloxy.

8. Composition selon l'une quelconque des revendications 1 à 7, dans laquelle le composant (e) comprend un polymère ayant la formule (V) et a une viscosité d'environ 2 à environ 10 000 mPa·s :

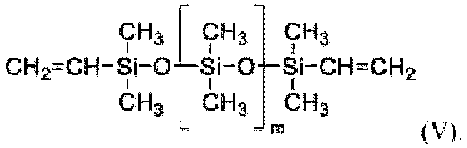

9. Composition selon l'une quelconque des revendications 1 à 8, comprenant en outre le composant (f) un vinylsiloxane linéaire.

10. Composition selon l'une quelconque des revendications 1 à 9, dans laquelle le composant (f) comprend un polymère ayant la formule (VI) et a une viscosité d'environ 10 à environ 10 000 Pa·s, dans laquelle a est d'environ 45 à 97 % en moles par rapport à b, et dans laquelle le polymère ayant la formule (VI) a au moins trois atomes d'hydrure liés au silicium :

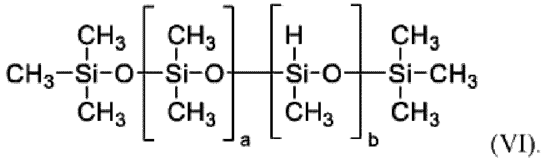

11. Composition selon l'une quelconque des revendications 1 à 10, comprenant en outre le composant (g) au moins un régulateur de vitesse ou inhibiteur de vitesse.

12. Composition selon l'une quelconque des revendications 1 à 11, dans laquelle le composant (g) est choisi dans le groupe constitué par : 2-méthyl-3-butyn-2-ol, 1-éthynyl-cyclohexanol, malétate de diallyle, isocyanurate de triallyle, 1,3,5,7-tétravinyl-1,3,5,7-tétraméthylcyclotétrasiloxane, et phosphite de triphényle.

13. Gel de silicone obtenu par chauffage et durcissement de la composition selon l'une quelconque des revendications 1 à 12.

14. Composition formant un gel de silicone comprenant :
(a) un polydiméthylsiloxane à terminaison α-diméthylvinylsiloxy-ω-diméthylhydrure ;
(b) un limiteur de chaîne comprenant une alpha-oléfine ou un siloxane comprenant un groupe vinyle ou un groupe hydrure terminal ; et
(c) un catalyseur d'hydrosilylation.

15. Composition selon la revendication 14, dans laquelle le composant (b) est un siloxane ayant la formule (VII) : 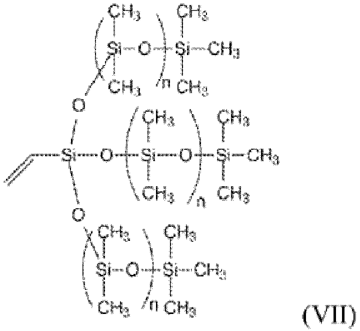 dans laquelle n est un entier de telle sorte que la viscosité du composant ayant la formule (VII) est d'environ 2 à environ 20 000 mPa·s.

16. Gel de silicone obtenu par chauffage et durcissement de la composition selon la revendication 14 ou 15.
